# EUROPÄISCHE PATENTANMELDUNG

(11) **EP 1 618 802 A1**
(43) Veröffentlichungstag der Anmeldung: **25.01.2006**
(21) Anmeldenummer: 04017228.0
(22) Anmeldetag: 21.07.2004
(51) Int. Cl.: A23L 2/46, C12H 1/18, B67D 1/08

(54) **Verfahren zum Haltbarmachen eines Getränks**

(71) Anmelder: Familienbrauerei Huber GmbH & Co.KG, 6380 St. Johann in Tirol (AT)
(72) Erfinder: Huber, Günther, 6380 St. Johann in Tirol (AT)
(74) Vertreter: Grünecker, Kinkeldey, Stockmair & Schwanhäusser Anwaltssozietät

(57) **Zusammenfassung**

Es wird ein Verfahren zum Haltbarmachen eines Getränks, insbesondere von Bier vorgeschlagen, das es gestattet, auch eine größere Menge Getränk sicher und zuverlässig haltbar zu machen. Zu diesem Zweck wird vorgeschlagen, das bereits in Kegs abgefüllte Getränk einer Wärmebehandlung zu unterziehen.

## Beschreibung

Die Erfindung bezieht sich auf ein Verfahren zum Haltbarmachen eines Getränks durch Wärmebehandlung.

Es ist gängige Praxis, in Flaschen abgefülltes Bier in einer Wärmebehandlungs- bzw. Pasteurisierungsanlage auf Temperaturen zu erwärmen, bei der die gängigen Mikroorganismen im Bier abgetötet und somit die Haltbarkeit des Biers verbessert wird. Zur Überwachung der Temperatur wird eine der Flaschen geöffnet und mit einer Temperaturmesseinrichtung, beispielsweise einem Thermometer, versehen, mit dem die Wärmebehandlungsanlage gesteuert bzw. der Erfolg der Wärmebehandlung, d.h. das Erreichen der vorbestimmten Temperatur, überwacht und dokumentiert werden kann.

Außer in Flaschen werden Bier und andere Getränke jedoch auch in sogenannten Kegs abgefüllt, die seit Jahrzehnten die üblichen Holzfässer mehr und mehr verdrängen. Kegs sind zylindrische Metallfässer mit einem hermetisch abgeschlossenen Innenteil, die über einen Fitting gereinigt, gefüllt und entleert werden. Das Fitting steht mit einem Steigrohr in Verbindung, das bis zum Kegboden reicht und damit die Befüllung und Entleerung des Kegs ermöglicht. Das Keg steht immer unter Druck, wobei ein Druckverlust deshalb eine Undichtheit oder Manipulation am Keg anzeigen kann. Die Kegs werden vor dem Befüllen gereinigt und sterilisiert. Die Reinigung der Kegs erfolgt innen und außen, wobei zunächst der Restdruck im Keg geprüft wird, um eventuell nicht vollständig entfernte Reste des Getränks und CO₂ festzustellen und diese auszutreiben. Dann erfolgt eine Spülung mit Heißlauge und Heißwasser, jeweils gefolgt durch ein Austreiben der Reste mit Sterilluft bzw. Dampf. Nach dem Reinigen erfolgt das Sterilisieren, wobei aktiv durch eine Dampfzufuhr dafür gesorgt wird, dass eventuell noch vorhandene, lebende Mikroorganismen vemichtet werden. Anschließend wird das Keg befüllt. Eine Pasteurisation der befüllten Kegs war bisher nicht möglich.

Der Erfindung liegt somit die Aufgabe zugrunde, ein Verfahren zum Haltbarmachen eines Getränks, das in Kegs abgefüllt ist, aufzuzeigen.

Die Aufgabe wird durch ein Verfahren mit den Merkmalen des Anspruchs 1 gelöst.

Es wurde festgestellt, dass es ohne weiteres möglich ist, auch ein befülltes, unter Druck stehendes Keg einer definierten Wärmebehandlung, insbesondere einer Pasteurisierung, zu unterwerfen.

Dabei ist es zweckmäßig, dass das Keg in geschlossenem Zustand wärmebehandelt wird und mit weniger als dem maximalen Aufnahmevolumen befüllt wird. Durch diese Maßnahme kann auch ein befülltes Keg pasteurisiert werden, wie dies bisher nur für in Flaschen abgefülltes Bier möglich war.

Bevorzugt enthält das Keg bis zu 10 Vol.% weniger Inhalt als dies bei maximaler Befüllung möglich wäre, wobei die Minderbefüllung auch vom maximalen Fassungsvermögen des Kegs und vom Ausdehnungskoeffizienten des jeweiligen Getränks abhängt.

Zum Steuern des Temperaturverlaufs und/oder zur Feststellung und Dokumentation der maximal erreichten Wärmebehandlungstemperatur wird bevorzugt ein Referenzkeg eingesetzt, das mit Flüssigkeit, insbesondere Wasser oder Getränk gefüllt und mit einer Temperaturmesseinrichtung versehen ist. Die Temperaturmesseinrichtung sollte sich bevorzugt an einer Kernstelle im Keg, d.h. an einer Stelle befinden, die sich bei einer Wärmebehandlung am langsamsten erwärmt.

Um sicherzustellen, dass die Temperaturmessung im Referenzkeg immer an der gleichen Stelle und immer an der Kernstelle des langsamsten Temperaturanstiegs befindet, enthält das Referenzkeg bevorzugt eine Aufnahmehülse, die sich von außen in das Innere des Kegs hineinerstreckt und so angeordnet ist, dass die Temperaturmesseinrichtung an der vorbestimmten Stelle platziert werden kann.

Bevorzugt ist das Referenzkeg ebenfalls und in gleicher Weise verschlossen und unter Druck gesetzt, wie dies die befüllten Kegs sind. Auf diese Weise werden einerseits die gleichen äußeren Bedingungen für die Temperaturmessung geschaffen, andererseits wird sichergestellt, dass eine Wärmekonvektion die Messungen nicht stört.

Wichtig ist ebenfalls, dass die Anfangstemperatur der Flüssigkeit im Referenzkeg im Wesentlichen der Anfangstemperatur des zu behandelnden Getränks entspricht, bzw. durch steuerungstechnische oder rechnerische Maßnahmen unterschiedliche Anfangstemperaturen ausgeglichen werden. Nur so ist es zuverlässig möglich, von der im Referenzkeg herrschenden Temperatur auf die Temperatur des zu behandelnden Getränks zu schließen.

Wegen des größeren Füllvolumens von Kegs (z.B. 30-I-Keg oder 50-I-Keg) gegenüber dem Befüllvolumen von Flaschen muss auch die Wärmeführung während des Wärmebehandlungsprozesses geändert werden. Insbesondere ist es zweckmäßig, eine Haltezeit auf der Wärmebehandlungstemperatur vorzusehen. Weiterhin kann es zweckmäßig sein, die Aufheizgeschwindigkeit zu modifizieren, wobei in einer Anfangsphase zunächst mit voller Leistung erwärmt und anschließend die Energiezufuhr verringert wird. Je nach der Art der verwendeten Wärmebehandlungsvorrichtung können weitere Modifikationen vorgenommen werden.

Ausführungsbeispiele des erfindungsgemäßen Verfahrens werden nachfolgend anhand der Zeichnungen näher erläutert. Es zeigen:

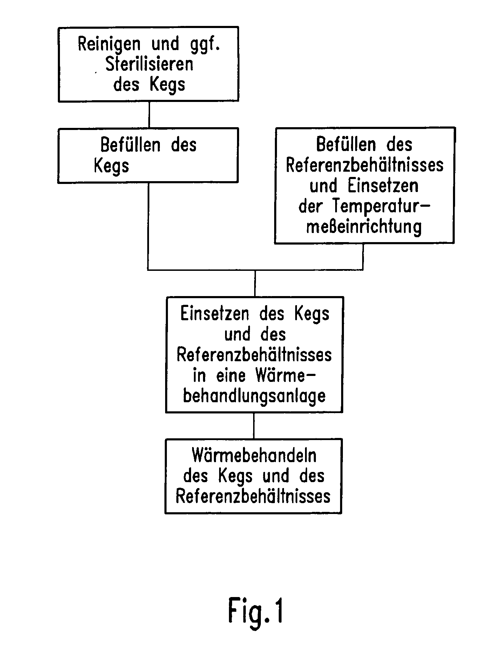

- Fig. 1: ein Fließdiagramm des erfindungsgemäßen Verfahrens,
- Fig. 2: eine schematische Darstellung eines erfindungsgemäß verwendeten Referenzkegs, und
- Fig. 3 - 6: Temperatur-Zeit-Kurven für eine Wärmebehandlung.

Zur Durchführung des erfindungsgemäßen Verfahrens werden zunächst die üblichen und herkömmlicherweise verwendeten Kegs, den auch bisher durchgeführten Reinigungs- und Sterilisierungsmaßnahmen unterworfen, wobei jedoch die Sterilisierungsmaßnahmen weniger umfangreich sein müssen bzw. gegebenenfalls sogar entfallen können. Der Begriff "Keg" soll sehr breit verstanden werden und insbesondere alle geschlossenen Druckbehälter zur Getränkeabfüllung umfassen.

Dann werden die Kegs in üblicher Weise befüllt. Das erfindungsgemäße Verfahren hat sich besonders für Weißbier, insbesondere für Hefeweizen bewährt, es kann jedoch jedes andere Getränk und insbesondere jede andere Biersorte mit dem erfindungsgemäßen Verfahren wärmebehandelt werden.

Beim Befüllen wird sichergestellt, beispielsweise durch einen induktiven Zähler an der Befüllanlage, dass jedes Keg unterhalb seiner maximalen bzw. zum Verkauf üblichen Aufnahmefähigkeit befüllt wird; d.h. in ein herkömmliches 30-I-Keg wird weniger als 30 I und ein herkömmliches 50-I-Keg weniger als 50 I Bier eingefüllt, um nur die beiden gängigsten Keg-Größen zu erwähnen. Die Minderfüllung hängt vom Ausdehnungskoeffizient ab und kann insbesondere bis zu 10 Vol.%, bevorzugt 4 bis 8 Vol.% und insbesondere bevorzugt 5 bis 8 Vol.% betragen. Über den induktiven Zähler wird die Abrechnung entsprechend modifiziert.

Die fertig befüllten und druckdicht geschlossenen Kegs werden anschließend einer Wärmebehandlungseinrichtung zugeführt. Diese kann ein herkömmlicher Kammerpasteur sein, wie er auch zum Pasteurisieren von Flaschenbier verwendet werden kann.

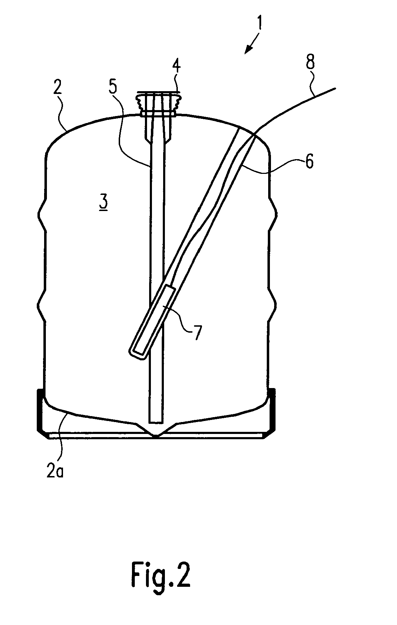

Gleichzeitig mit den befüllten Kegs wird in die Wärmbehandlungsanlage ein Referenzbehälter, insbesondere ein Referenzkeg 1, eingesetzt, das in Fig. 2 näher dargestellt ist. Zur Herstellung des Referenzkegs 1 wird ein normales Keg desjenigen Aufnahmevolumens verwendet, das auch für die Befüllung mit Getränk eingesetzt wird. Das Keg weist eine Wandung 2 auf, die einen Innenraum 3 allseitig druckdicht umschließt, wobei der Innenraum 3 nur über das sogenannte Fitting 4 zugänglich ist. Das Fitting 4 erlaubt das Befüllen und Entleeren des Innenraums 3, schließt jedoch ansonsten den Innenraum 3 druckdicht ab. Vom Fitting 4 führt ein Steigrohr 5 bis in die Nähe des Bodens 2a der Wandung 2, d.h. der dem Fitting 4 gegenüberliegenden Begrenzung des Innenraums 3, wobei das Steigrohr insbesondere eine vollständige Entleerung des Innenraums 3 sicherstellt.

Dieses herkömmliche Keg wird nun zum Referenzkeg 1 umfunktioniert, indem durch die Wandung 2 eine Hülse 6 in den Innenraum 3 eingesetzt wird, die bis in den Kernraum des Kegs reicht, wo erfahrungsgemäß die sich am langsamsten erwärmende Stelle im Innenraum 3 liegt, wenn das Keg von außen gleichmäßig über die Wandung 2 erwärmt wird. Diese Stelle befindet sich im unteren Drittel des Innenraums 3, etwa in der Mitte zwischen den umfangsseitigen, vertikalen Wänden. Die Hülse 6 besteht aus einem gut wärmeleitenden Material, z.B. Metall, und ist druckdicht befestigt, bevorzugt mit der Wandung 2 verschweißt. Die Hülse 6 kann jedoch auch über das Fitting 4 in den Innenraum 3 eingesetzt werden. Die Hülse 6 nimmt eine Temperaturmesseinrichtung 7 in Form eines Thermometers oder Temperaturfühlers auf und platziert diese an der kältesten Stelle im Innenraum 3. Wird ein Temperaturfühler 7 verwendet, so kann er über eine Signalleitung 8 mit einem geeigneten Anzeigegerät und/oder der Steuerung der Wärmebehandlungsvorrichtung in Verbindung stehten.

Das Referenzkeg 1 wird mit einer Flüssigkeit gefüllt, die entweder ebenfalls das abgefüllte Getränke, also z.B. Bier, oder Wasser sein kann. Die Flüssigkeit sollte im Wesentlichen die gleiche Temperatur wie das zu behandelnde Getränk aufweisen. Im Idealfall sollte darauf geachtet werden, dass das einer Wärmebehandlung zu unterwerfende Getränk in den normalen Kegs exakt die gleiche Temperatur aufweist wie die Flüssigkeit im Referenzkeg 1. Ist dies nicht der Fall, so müssen die Temperaturunterschiede festgestellt und bei der Steuerung des Ablaufs der Wärmebehandlung berücksichtigt und ausgeglichen werden.

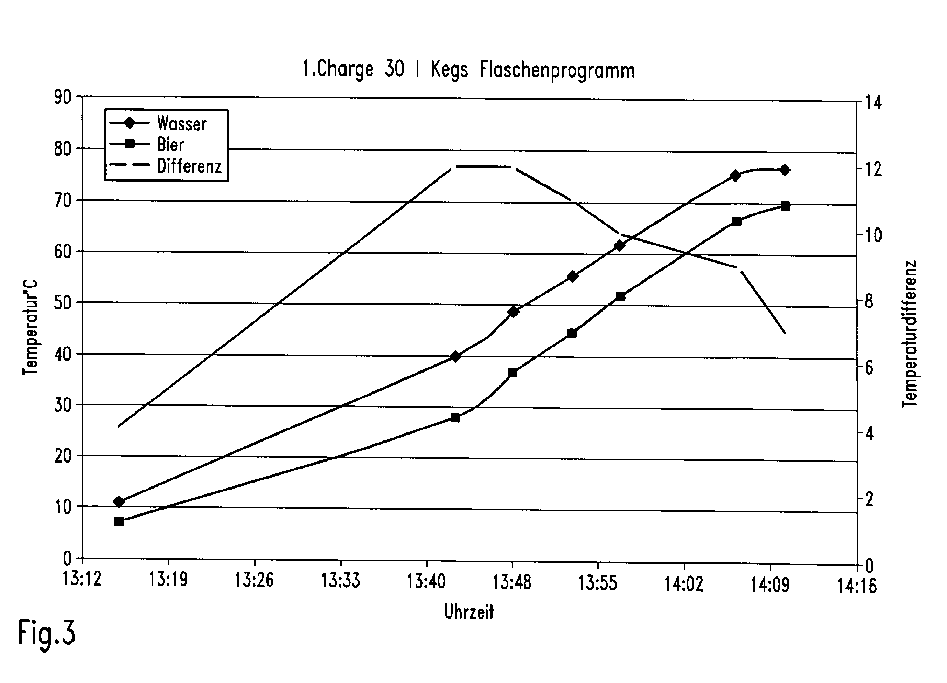

Beispiele einer erfolgreichen Wärmebehandlung von Bier in Kegs werden nachfolgend anhand der Fig. 3 bis 6 erläutert.

Zur Durchführung der Wärmebehandlung zum Zwecke des Pasteurisierens, wurde der bereits erwähnte Kammerpasteur eingesetzt, der mit einem sogenannten Flaschenprogramm, Programm 1, und einem modifizierten Programm 2, dem Fassprogramm ausgerüstet wurde. Die Kennzahlen, die den Temperatur-Zeit-Kurven der Fig. 3 bis 6 zum Erreichen einer Pasteurisierungstemperatur zwischen 60 und 65°C zugrunde liegen, sind der nachfolgenden Tabelle zu entnehmen:

### Kennzahlen Pasteurisation Kegs

| | | | | |
|---|---|---|---|---|
| Charge | 1 | 2 | 3 | 4 |
| Fassgröße 1 | 30 | 30 | 50 | 30 |
| Anzahl Kegs | 24 | 24 | 12 | 48 |
| Programm | 1 | 1 | 1 | 2 |
| Aufheizrate °C/min | 1,7 | 1,7 | 1,7 | 0,75/0,27* |
| Max.Temperaturdifferenz °C | 12 | 16 | 23 | 3,1 |
| Zum Zeitpunkt Halten: | 76 | 75 | 77,6 | 64,5 |
| Temperatur Wasser °C | | | | |
| Temperatur Bier °C | 63 | 62,8 | 64 | 62,1 |
| Differenz °C | 13 | 12,2 | 13,6 | 2,4 |
| Nachheizen bis Ende °C | 4 | 3,9 | 4,4 | 0,7 |
| | | | | |
| Temperatur Bier nachträglich im Fass gemessen °C | 64,4 | 63,6 | 65 | 62,5 |

| | | | | |
|---|---|---|---|---|
| * = Programm 2 Anfangs schnellere Aufheizung bei 30°C Dampfreduzierung = langsamere Aufheizung | | | | |

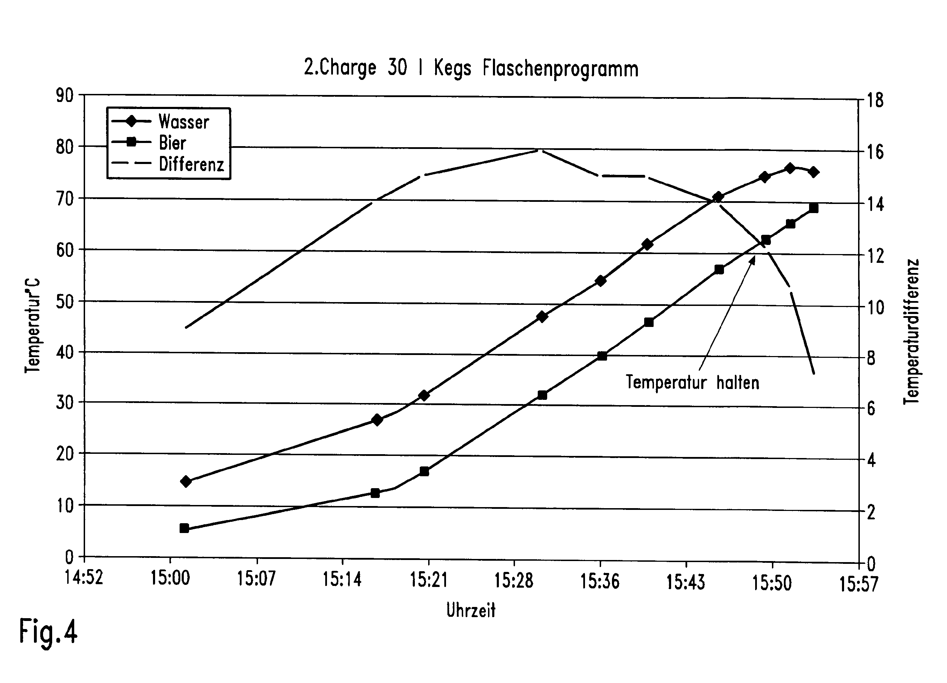

Bei den Chargen Nr. 1 und Nr. 2 (Fig. 3 und 4) wurden jeweils 24 Kegs à 30 I pasteurisiert und zwar mit dem sogenannten Flaschenprogramm, d.h. eine gleichmäßige Erwärmung bis auf Pasteurisierungstemperatur, im vorliegenden Beispiel 64°C, gefolgt von einer Haltezeit. Bedingt durch die unterschiedlichen Anfangstemperaturen zwischen der Flüssigkeit im Referenzkeg 1 (Wasser) und dem zu pasteurisierenden Bier, die sich bis auf Pasteurisierungstemperatur fortsetzt, d.h. nicht ausgleicht, muss die Pasteurisierung fortgeführt werden, bis die Temperatur im Referenzkeg um ein vorbestimmtes Maß, mindestens die Differenz der Anfangstemperaturen, über der gewünschten Pasteurisierungstemperatur liegt.

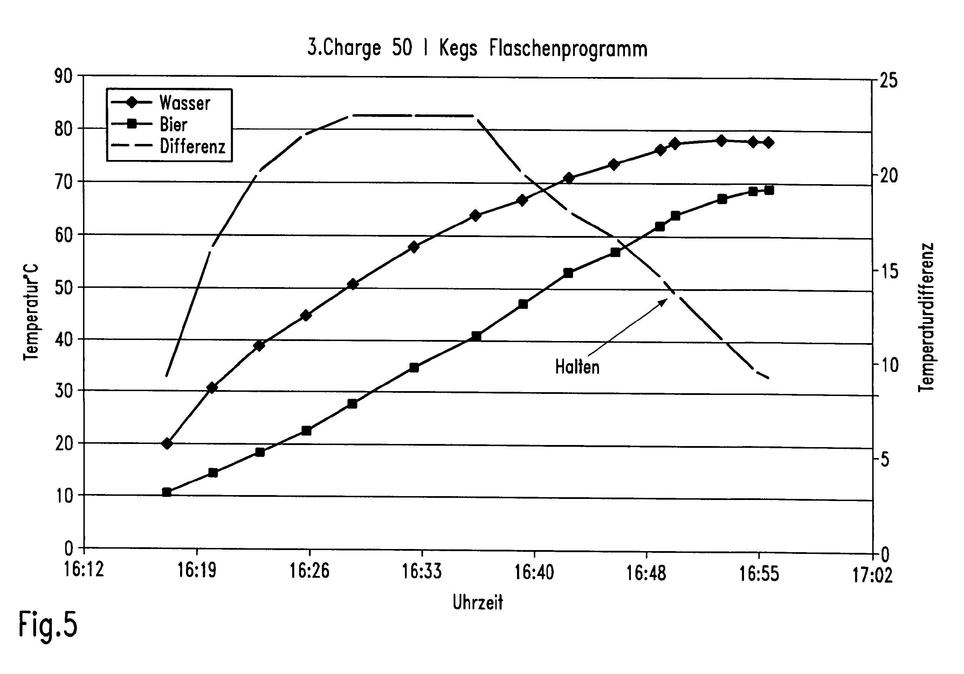

Das gleiche Verfahren wurde anschließend in der Charge Nr. 3 (Fig. 5) mit 50-I-Kegs durchgeführt. Bedingt durch die größeren Unterschiede der Anfangstemperatur liegt auch die Endtemperatur des Biers deutlich unter der Temperatur der Flüssigkeit im Referenzkeg 1, was hier ebenfalls berücksichtigt werden muss.

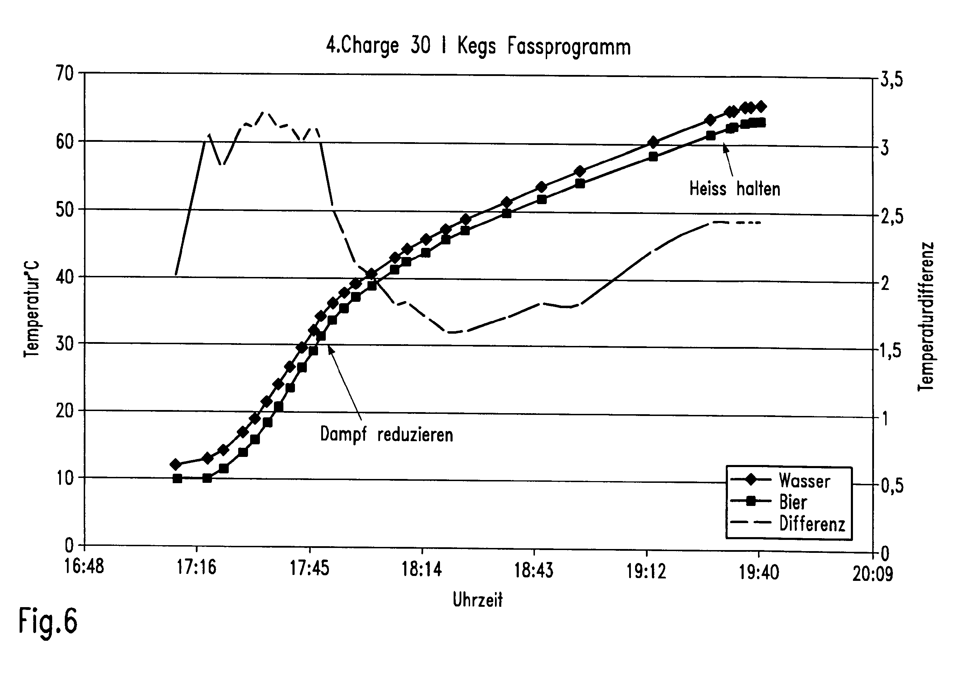

Die Charge Nr. 4 (Fig. 6) ist ein 30-1-Keg, wärmebehandelt im sogenannten Fassprogramm. Das Fassprogramm beinhaltet ein Aufheizen mit voller Leistung bis etwa 30°C. Anschließend wird die Aufheizleistung gedrosselt und langsam auf Pasteurisierungstemperatur erwärmt und dort gehalten, wobei jedoch der gesamte Wärmebehandlungsprozess wesentlich länger als mit dem Programm 1 dauert. Die Temperaturdifferenz zwischen der Flüssigkeit im Referenzkeg und dem Bier war hier sehr gering, führte jedoch trotzdem zu einer zu berücksichtigenden Temperaturdifferenz am Ende des Pasteurisierungsverfahrens.

In Abwandlung der beschriebenen und gezeichneten Ausführungsbeispiele kann als Referenzbehälter jeder geeignete Behälter, der in der Lage ist, eine Temperaturmesseinrichtung zu tragen verwendet werden, wenn sichergestellt ist, dass Unterschiede in den Parametern ausgleichbar sind. Das erfindungsgemäße Verfahren kann für andere Getränke und in anderen Wärmebehandlungseinrichtungen eingesetzt werden. Weiterhin kann das erfindungsgemäße Verfahren auch zur Wärmebehandlung aller größeren Biergefäße eingesetzt werden.

## Patentansprüche

1. Verfahren zum Haltbarmachen eines Getränks, insbesondere von Bier, wobei ein befülltes Keg wärmebehandelt wird.

2. Verfahren nach Anspruch 1, **dadurch gekennzeichnet, dass** das Keg in geschlossenem Zustand wärmebehandelt wird.

3. Verfahren nach Anspruch 1 oder 2, **dadurch gekennzeichnet, dass** das Keg mit weniger als dem maximalen Aufnahmevolumen befüllt wird.

4. Verfahren nach einem der Ansprüche 1 bis 3, **dadurch gekennzeichnet, dass** das Keg mit bis zu 10 Vol.%, insbesondere 4 bis 8 Vol.%, insbesondere 5 bis 8 Vol.% weniger als das maximale Aufnahmevolumen befüllt wird.

5. Verfahren nach einem der Ansprüche 1 bis 4, **dadurch gekennzeichnet, dass** zusammen mit dem zu behandelten Keg ein mit Flüssigkeit gefülltes und mit einer Temperaturmesseinrichtung (7) zum Feststellen der Temperatur an oder in der Nähe einer beim Erwärmen kältesten Stelle versehenes Referenzbehältnis, insbesondere ein Referenzkeg (1), wärmebehandelt wird.

6. Verfahren nach Anspruch 5, **dadurch gekennzeichnet, dass** das Referenzbehältnis in geschlossenem Zustand wärmebehandelt und mit einer Aufnahmehülse (6) für die Temperaturmesseinrichtung (7) versehen wird, die in sein Inneres bis an oder in die Nähe einer beim Erwärmen kältesten Stelle reicht.

7. Verfahren nach Anspruch 5 oder 6, **dadurch gekennzeichnet, dass** die Flüssigkeit im Referenzbehältnis im Wesentlichen die gleiche Anfangstemperatur wie das zu behandelnde Getränk aufweist oder Unterschiede in der Anfangstemperatur kompensiert werden.

8. Verfahren nach einem der Ansprüche 1 bis 7, **dadurch gekennzeichnet, dass** die Wärmebehandlung nach einer vorgegebenen Temperatur-Zeit-Kurve erfolgt, wobei eine Haltezeit auf der Wärmebehandlungstemperatur eingehalten wird.

9. Verfahren nach einem der Ansprüche 1 bis 8, **dadurch gekennzeichnet, dass** die Wärmebehandlung nach einer vorgegebenen Temperatur-Zeit-Kurve erfolgt, wobei in einer Anfangsphase stark, im Wesentlichen mit maximaler Leistung erhitzt und anschließend die Energiezufuhr verringert wird.

10. Keg für das Verfahren nach einem der Ansprüche 1 bis 9, **dadurch gekennzeichnet, dass** zur Verwendung als Referenzkeg (1) eine sich in seinen abgeschlossenen Innenraum (3) erstreckenden Hülse (6) zur Aufnahme einer Temperaturmesseinrichtung (7) vorgesehen ist.
